# EUROPÄISCHE PATENTANMELDUNG

(11) **EP 3 031 868 A1**
(43) Veröffentlichungstag der Anmeldung: **15.06.2016**
(21) Anmeldenummer: 14197796.7
(22) Anmeldetag: 12.12.2014
(51) Int. Cl.: C09D 1/02, E04B 1/74, C04B 28/02

(54) **Putzbeschichtungsmasse, Putz gebildet aus dieser Putzbeschichtungsmasse, Wandaufbau oder Baukörper, enthaltend diesen Putz, Verfahren zur Herstellung des Putzes und Verwendung des Putzes für die Schall- und/oder Wärmedämmung**

(71) Anmelder: DAW SE, 64372 Ober-Ramstadt (DE)
(72) Erfinder: LOHMANN, Thomas, 68526 Ladenburg (DE); HENNICKE, Thomas, 99834 Gerstungen (DE); BEMMANN, André, 99834 Gerstungen (DE); SCHÖSSE, Klaus, 36208 Wildeck-Bosserode (DE)
(74) Vertreter: Metten, Karl-Heinz

(57) **Zusammenfassung**

Die Erfindung betrifft eine Putzbeschichtungsmasse, umfassend mindestens ein getrocknetes geschnittenes und/oder gehäckseltes, sowie gegebenenfalls gewalztes, Pflanzenmaterial ausgewählt aus der Gruppe bestehend aus Stängeln, Halmen, Blättern, Spreu und Hülsen oder deren beliebige Mischungen, mindestens ein hydraulisches Bindemittel, mindestens ein Wasserretentionsmittel und mindestens ein Wasserglas. Ferner betrifft die Erfindung Putze, insbesondere Leichtputze, oder Ausfachungen, umfassend oder gebildet aus einer erfindungsgemäßen Putzbeschichtungsmasse. Außerdem betrifft die Erfindung einen Wandaufbau oder Baukörper, umfassend mindestens einen erfindungsgemäßen Putz, insbesondere Leichtputz, oder mindestens eine erfindungsgemäße Ausfachung. Des Weiteren betrifft die Erfindung ein Verfahren zur Herstellung eines erfindungsgemäßen Putzes, insbesondere Leichtputzes, oder einer erfindungsgemäßen Ausfachung sowie ein Verfahren zur Herstellung eines erfindungsgemäßen Wandaufbaus oder eines erfindungsgemäßen Baukörpers. Schließlich betrifft die Erfindung die Verwendung des erfindungsgemäßen Putzes oder der erfindungsgemäßen Ausfachung oder des erfindungsgemäßen Wandaufbaus oder des erfindungsgemäßen Baukörpers für die Innen- oder Außenwärme- und/oder -schalldämmung von Gebäuden.

## Beschreibung

Die Erfindung betrifft eine Putzbeschichtungsmasse, umfassend mindestens ein getrocknetes geschnittenes und/oder gehäckseltes sowie gegebenenfalls gewalztes Pflanzenmaterial, einen Putz gebildet aus dieser Putzbeschichtungsmasse, einen Wandaufbau oder Baukörper, enthaltend diesen Putz, ein Verfahren zur Herstellung des Putzes und die Verwendung des Putzes für die Schall- und/oder Wärmedämmung.

Die Wärmedämmung von Gebäudefassaden gewinnt vor dem Hintergrund knapper werdender Ressourcen und steigender Energiekosten zunehmend an Bedeutung. Zu diesem Zweck werden sowohl Dämmplatten auf Basis geschäumter Kunststoffe, beispielsweise sogenannte EPS-Dämmplatten, als auch Dämmplatten auf der Basis von Naturfasern, beispielsweise Dämmplatten enthaltend Hanf oder Flachs, eingesetzt. Der Verwendung von Wärmedämmplatten sind jedoch zuweilen bauliche bzw. baurechtliche Grenzen gesetzt, beispielsweise aus Gründen von Bauverordnungen bei der Restaurierung von denkmalgeschützten Gebäuden. Auch bei der Restaurierung nicht-denkmalgeschützter Gebäude findet man häufig nicht die für die Verwendung von Wärmedämmplatten erforderlichen ebenen Untergründe vor. Bereits sehr früh hat man beispielsweise bei Fachwerkhäusern zumindest eine eingeschränkte Wärmedämmung durch den Einsatz von Lehmputzen erreicht, die mit Leichtzuschlägen versetzt waren. Beispielsweise geht aus der DE 102 006 011 519 ein mit Blähglasgranulat versetzter Lehmputz hervor. Alternativ wird für Lehmputze in der DE 43 25 914 der Zusatz von Blähschiefer oder Muschelkalk vorgeschlagen. Aus der DE 201 11 132 ist ein Lehmputz gebildet aus getrockneten Tongranulat und Schäben von Hanf- und Flachspflanzen bekannt. Lehmputze, auch solche mit den genannten Leichtzuschlagsstoffen, verfügen noch stets über eine sehr hohe Dichte, was eine verminderte Wärmedämmung zur Folge hat. Nachteilig bei Lehmputzen ist ferner, dass sich bei der Trocknung Risse bilden. Zudem sind Lehmputze gegenüber Feuchtigkeitsanfall sehr empfindlich und verlieren ihre Festigkeit. Um die Dichte von lehmbasierten Putzen zu erniedrigen und gute Wärmedämmeigenschaften zu erzielen, hat man versucht, expandierte Polystyrolkugeln zuzusetzen. Gemäß der DE 198 022 30, DE 101 014 33, DE 198 34 560 und DE 101 23 908 kommen hierfür Polystyrolkugeln in Betracht, deren Oberfläche durch Ruß oder Graphit, durch Polymerisatdispersionen, durch Metallseifen kombiniert mit feinteiliger Kieselsäure und Tensiden bzw. durch Verschmelzung mit Zementpartikeln modifiziert wurde. In der DE 32 15 535 wird die Beschichtung der Polystyrolkugeln mit einem faserhaltigen Bindemittel auf Ölbasis vorgeschlagen. Auch wird die Anbringung der Fasern an die Oberfläche der Polystyrolkugeln durch das Anlösen der Polystyroloberfläche beschrieben. Die vorangehend genannten Putzbeschichtungsmassen liefern jedoch häufig Putze, deren mechanische Festigkeit nicht ausreichend ist. Auch neigen diese Putzbeschichtungsmassen als Trockenmasse zur Entmischung, insbesondere bei Einsatz von geschäumten Polystyrolkugeln. Gemäß der DE 196 43 605 versucht man dadurch zu einer wärmedämmenden Beschichtungsmasse für die Ausfachung von Fachwerkhäusern zu gelangen, dass man von einer Trockenmasse aus Kalk, Hanfschäben und Sand ausgeht. Um zu einer mechanisch stabilen Beschichtung bzw. Ausfachung zu gelangen, ist bei diesen Beschichtungsmasse allerdings ein sehr hoher Kalkanteil erforderlich. Hiermit geht der Nachteil einer extrem langen Aushärtungszeit schon für relativ geringe Schichtdicken im Bereich von 5 bis 10 mm einher. Diese liegen im Bereich von 24 bis 48 Stunden. Um mit den genannten Beschichtungsmassen eine hinreichende Wärmedämmung zu erzielen, sind allerdings Schichtdicken von mindestens 30, vorzugsweis mindestens 50 mm erforderlich. Die genannten Schichtdicken lassen sich überdies nur dadurch erhalten, dass man das Beschichtungsmaterial in zwei Lagen aufträgt, wobei die erste Lage druckfest ausgehärtet sein muss, bevor mit dem Auftrag der zweiten Lage begonnen werden kann. Die Zeitspanne für eine druckfeste Aushärtung liegt bei etwa sieben Tagen. Derartige Bearbeitungszeiträume sind in der Praxis nicht durchsetzbar. Ein weiterer Nachteil, der mit den beschriebenen lehmbasierten, Leichtfüllstoffe enthaltenden Beschichtungsmassen einhergeht, ist deren nur bedingte maschinelle Applizierbarkeit. Hierbei kommt erschwerend hinzu, dass ein manueller Auftrag vielfach von vornherein nicht in Frage kommt, da dieses viel zu viel Zeit in Anspruch nehmen würde.

Es wäre daher wünschenswert, auf Beschichtungsmassen zurückgreifen zu können, die nicht mit den Nachteilen des Stands der Technik behaftet sind. Der vorliegenden Erfindung lag daher die Aufgabe zu Grunde, Beschichtungsmassen zur Verfügung zu stellen, die über eine geringe Dichte verfügen und hinreichende Wärmedämmeigenschaften liefern und die darüber hinaus insbesondere unproblematisch herzustellen und auch maschinell zu applizieren sind.

Demgemäß wurde eine Putzbeschichtungsmasse gefunden, umfassend
a) mindestens ein getrocknetes geschnittenes und/oder gehäckseltes, sowie gegebenenfalls gewalztes, Pflanzenmaterial ausgewählt aus der Gruppe bestehend aus Stängeln, Halmen, Blättern, Spreu und Hülsen oder deren beliebige Mischungen,
b) mindestens ein hydraulisches Bindemittel,
c) mindestens ein Wasserretentionsmittel und
d) mindestens ein Wasserglas.

Das getrocknete geschnittene und/oder gehäckselte Pflanzenmaterial basiert vorzugsweise auf Getreide-, Schilfrohr- bzw. Reetpflanzen oder Öl- oder Faserpflanzen oder auf Hülsenfrüchten oder einer beliebigen Mischung derselben.

Die erfindungsgemäße Beschichtungsmasse soll hierbei sowohl eine ohne Zugabe von Wasser (Komponente k)) als auch eine mit Zugabe von Wasser (Komponente k)) erhaltene Masse umfassen. Bei der letztgenannten Alternative kann die Menge an zugegebenem Wasser (Komponente k)) so gewählt werden, dass sie auf einen Untergrund appliziert werden kann, oder aber in einer Menge, die noch nicht ausreicht, um auf einen Untergrund appliziert werden zu können, wohl aber um als Vormasse zu dem Anbringungsort manuell oder maschinell transportiert werden zu können.

Auf Untergründen applizierbare erfindungsgemäße Putzbeschichtungsmassen können in einer Ausführungsform, bezogen auf das Gesamtgewicht dieser applizierbaren Putzbeschichtungsmasse, einen Anteil an als Komponente k) zugesetztem Wasser im Bereich von 20 bis 80 Gew.-%, bevorzugt im Bereich von 25 bis 75 Gew.-% und besonders bevorzugt im Bereich von 30 bis 70 Gew.-%, aufweisen. Soll die erfindungsgemäße Putzbeschichtungsmasse mit der Hand appliziert werden, wird bevorzugt, bezogen auf das Gesamtgewicht dieser applizierbaren Putzbeschichtungsmasse, als Komponente k) ein Anteil an Wasser im Bereich von 35 bis 65 Gew.-%, bevorzugt im Bereich von 40 bis 60 Gew.-% und besonders bevorzugt im Bereich von 45 bis 55 Gew.-%, eingesetzt. Soll die erfindungsgemäße Putzbeschichtungsmasse mittels maschineller Spritzapplikation angebracht werden, wird bevorzugt, bezogen auf das Gesamtgewicht dieser applizierbaren Putzbeschichtungsmasse, als Komponente k) ein Anteil an Wasser im Bereich von 20 bis 60 Gew.-%, bevorzugt im Bereich von 30 bis 55 Gew.-% und besonders bevorzugt im Bereich von 35 bis 45 Gew.-%, eingesetzt.

Das getrocknete geschnittene und/oder gehäckselte Pflanzenmaterial wird bevorzugt vor Zugabe zu bzw. der Herstellung der erfindungsgemäßen Beschichtungsmasse einem Walzvorgang unterzogen. Das erfindungsgemäße Pflanzenmaterial ist vorzugsweise im Wesentlichen frei von Wurzeln, Früchten, Blüten und/oder Samen, insbesondere frei von Wurzeln, Früchten, Blüten und Samen. Demgemäß wird bevorzugt auf solches getrocknetes geschnittenes und/oder gehäckseltes Pflanzenmaterial ohne Samenstand, Fruchtstand bzw. ohne Blütenstand zurückgegriffen. Das getrocknete geschnittene und/oder gehäckselte und vorzugsweise auch gewalzte Pflanzenmaterial umfasst demgemäß bevorzugt Stroh, Schäben, Naturfasern oder deren beliebige Mischung. Hierbei sind Stroh oder eine Mischung aus Stroh und Schäben besonders bevorzugt. Besonders gute Ergebnisse stellen sich auch ein bei Verwendung von Rapsstroh ein. Dass die Pflanzenmaterialien in getrockneter Form zu verwenden sind, bedeutet nicht, dass diese wasserfrei vorzuliegen haben, wobei dieses gleichwohl in einer alternativen Ausgestaltungsform mit umfasst ist. Vielmehr ist es bevorzugt, getrocknetes Pflanzenmaterial einzusetzen, insbesondere Stroh, z.B. Rapsstroh, das einen Restwassergehalt im Bereich von 1 bis 20 Gew.-%, bevorzugt im Bereich von 3 bis 17 Gew.-%, besitzt.

Der Begriff Stroh umfasst im Sinne der vorliegenden Erfindung gedroschene und getrocknete Halme und Blätter von Getreide, Ölpflanzen, Faserpflanzen oder Hülsenfrüchten. Als Schäben bezeichnet man im Allgemeinen verholzte Stängelteile, die bei der Aufbereitung von z.B. Bast- bzw. Faserpflanzen anfallen.

In einer zweckmäßigen Ausgestaltung kann das Stroh ausgewählt werden aus der Gruppe bestehend aus Weizen-, Gersten-, Hafer-, Roggen-, Flachs-, Hanf-, Reis-, und Rapsstroh oder deren beliebige Mischungen. Besonders bevorzugt wird auf Weizen-, Gersten-, Raps-, Reis- und/oder Hanfstroh zurückgegriffen, wobei sich Rapsstroh als besonders geeignet erwiesen hat.

In einer bevorzugten Ausgestaltung weist das getrocknete geschnittene und/oder gehäckselte und gegebenenfalls gewalzte Pflanzenmaterial, insbesondere das Stroh und/oder die Schäben, eine durchschnittliche Länge, vorzugsweise eine absolute Länge, auf, die nicht oberhalb von etwa 60 mm, insbesondere nicht oberhalb von 50 mm und besonders bevorzugt nicht oberhalb von 45 mm, liegt und/oder die nicht unterhalb von 5 mm, insbesondere nicht unterhalb von 10 mm und besonders bevorzugt nicht unterhalb von 15 mm, liegt, also z.B. im Bereich von 5 bis 60 mm, 10 bis 50 mm oder 15 bis 45 mm.

Für das hydraulische Bindemittel greift man bevorzugt auf hydraulische Kalke und/oder Zemente zurück. Unter den Zementen sind die Zemente nach DIN EN 197-1, bevorzugt DIN EN 197-1 - CEM I, besonders bevorzugt DIN EN 197-1 - CEM I 52,5R oder - CEM I 42,5R, besonders geeignet. Besonders gute Resultate stellen sich regelmäßig bei Verwendung von Zementen nach DIN EN 197-1 - CEM I 52,5R ein.

Für geeignete Wasserretentionsmittel kann in einer zweckmäßigen Ausgestaltung zurückgegriffen werden auf Verbindungen bzw. Zusammensetzungen, wie sie bei der Herstellung von Farben als Acrylatverdicker, Polyurethanverdicker und natürliche oder synthetische anorganische Verdicker zum Einsatz kommen sowie alternativ oder zusätzlich auf modifizierte Stärke, Xanthan, Guar und/oder Polysaccharide. Bevorzugt umfassen Polysaccharide Cellulose und/oder Cellulosederivate. Unter den Cellulosederivaten sind Celluloseether wie Hydroxyethylcellulose, Hydroxypropylmethylcellulose (HPMC), Hydroxyethylmethylcellulose (HEMC), Methylcellulose und/oder Ethylmethylcellulose (EMC) besonders geeignet. Selbstverständlich können auch beliebige Mischungen der vorangehen genannten Verbindungen zum Einsatz kommen.

Geeignete Wassergläser können ausgewählt werden aus Lithium-, Natrium-, Kaliumwasserglas oder beliebigen Mischungen hiervon. Natrium- und Kaliumwasserglas haben sich als besonders zweckmäßig erwiesen. Wasserglas kann sowohl in Pulverform als auch in Form wässriger Lösungen, wie z.B. kommerziell erhältlich, eingesetzt werden. In kommerziell erhältlichen wässrigen Lösungen liegt das Wasserglas im Allgemeinen mit einem 22 Gew.-%igen Feststoffanteil vor.

Des Weiteren sind solche erfindungsgemäßen Putzbeschichtungsmassen besonders vorteilhaft, die ferner e) mindestens ein Hydrophobierungsmittel und/oder f) mindestens einen Luftporenbildner und/oder g) mindestens ein latenthydraulisches Bindemittel und/oder h) mindestens ein puzzolanisches Bindemittel und/oder i) mindestens ein nichthydraulisches Bindemittel und/oder j) weitere Additive enthalten.

Geeignete latenthydraulische Bindemittel umfassen z.B. Hochofenschlacke, Hüttensand und/oder Flugasche. Exemplarisch sei für geeignete puzzolanische Bindemittel auf Mikrosilika, Trass und/oder Tuff, besonders bevorzugt Mikrosilika, verwiesen. Demgemäß können in der erfindungsgemäßen Putzbeschichtungsmasse mindestens ein hydraulisches Bindemittel und mindestens ein latenthydraulisches Bindemittel, zum Beispiel in Form eines so genannten Mischbinders, vorliegen.

Sehr gute Festigkeiten für die aus den erfindungsgemäßen Putzbeschichtungsmassen erhaltenen Putze basieren auf solchen Putzbeschichtungsmassen, bei denen, bezogen auf die Gesamtmenge an hydraulischen, latenthydraulischen und puzzolanischen Bindemitteln, der Gewichtsanteil an hydraulischem Bindemittel mindestens 50 %, bevorzugt mindestens 65 % ,und besonders bevorzugt mindestens 75 %, beträgt.

Der Anteil an getrocknetem geschnittenen und/oder gehäckselten und gegebenenfalls gewalzten Pflanzenmaterial oder der Anteil an getrocknetem geschnittenen und/oder gehäckselten und gegebenenfalls gewalzten Pflanzenmaterial, enthaltend Stroh, insbesondere Rapsstroh, oder bestehend aus Stroh, insbesondere Rapsstroh, oder enthaltend Stroh und Schäben, insbesondere Rapsstroh und Schäben, oder bestehend aus Stroh und Schäben, insbesondere Rapsstroh und Schäben, liegt in einer bevorzugten Ausführungsform, bezogen auf das Gewicht der Putzbeschichtungsmasse exklusive Komponente k) (Wasser), im Bereich von 5 bis 50 Gew.-%, bevorzugt im Bereich von 10 bis 40 Gew.-% und besonders bevorzugt im Bereich von 15 bis 30 Gew.-%.

Als geeignete Hydrophobierungsmittel kann auf Wachse, Fettsäuren, Fettsäuresalze, Fettsäureester, vorzugsweise Oleaten und/oder Stearaten, Zinkoxid, Silikonwachse oder deren beliebige Mischungen, und/oder Silikonöle oder deren beliebige Mischungen zurückgegriffen werden. Als Wachse kommen insbesondere Polyolefin-, Paraffin-, Montan-, Carnauba-, Amidwachse und deren beliebige Mischungen in Betracht.

Als geeignete Additive kommen für die erfindungsgemäßen Putzbeschichtungsmassen Konservierungsmittel, Dispergiermittel, Rheologieverbesserer, Abbindeverzögerer, Abbindebeschleuniger, Pigmente, Dispersionen, Fasermaterial, oder beliebigen Mischungen dieser Komponenten in Betracht. Die erfindungsgemäßen Putzbeschichtungsmassen zeichnen sich allerdings auch dadurch aus, dass sie ohne Konservierungsmittel auskommen. D.h. weder die Putzbeschichtungsmasse, auch nicht wenn mit Wasser (Komponente k)) versetzt, noch die aus dieser Putzbeschichtungsmasse erhaltenen Putze neigen ohne Konservierungsmittel zur Schimmelbildung. Die Putzbeschichtungsmassen verfügen somit selbst ohne Konservierungsmittel regelmäßig über eine fungizide, algizide bzw. biozide Wirkung.

Bevorzugte Putzbeschichtungsmassen zeichnen sich dadurch aus, dass diese im Wesentlichen keine organischen Bindemittel und/oder im Wesentlichen keinen Sand, insbesondere keine Füllstoffe, und/oder keinen Kies, insbesondere kein Körnungsmaterial, enthalten. Besonders bevorzugt sind hierbei Beschichtungsmasse, die im Wesentlichen keine organischen Bindemittel, im Wesentlichen keinen Sand, insbesondere keine Füllstoffe, und im Wesentlichen keinen Kies, insbesondere kein Körnungsmaterial, enthalten. Auf diese Weise erhält man Putzbeschichtungsmassen, mit denen Putze mit hoher Festigkeit bei trotzdem relativ geringer Dichte zugänglich sind.

In einer weiteren zweckmäßigen Ausgestaltung liegen in der erfindungsgemäßen Putzbeschichtungsmasse mindestens ein Wasserglas und mindestens ein Luftporenbildner oder mindestens ein Wasserglas, mindestens ein Luftporenbildner und mindestens ein Hydrophobierungsmittel vor.

In einer weiteren bevorzugten Ausführungsform erfindungsgemäßer Putzbeschichtungsmassen ist vorgesehen, dass darin, bezogen auf das Gesamtgewicht der Komponenten b) bis j), 70 bis 95 Gew.-%, insbesondere 75 bis 90 Gew.-%, an hydraulischem Bindemittel b), 0,01 bis 2,0 Gew.-%, insbesondere 0,05 bis 1,0 Gew.-%, an Wasserretentionsmittel c), 0,05 bis 5 Gew.-%, insbesondere 0,3 bis 2 Gew.-%, an Wasserglas d), 0 bis 5 % Gew.-%, insbesondere 0,5 bis 3 Gew.-%, an Hydrophobierungsmittel e), 0 bis 5 Gew.-%, insbesondere 0,05 bis 2,0 Gew.-%, an Luftporenbildner f), 0 bis 30 Gew.-%, insbesondere 5 bis 20 Gew.-%, an latenthydraulischem Bindemittel g), 0 bis 30 Gew.-%, insbesondere 5 bis 20 Gew.-%, an puzzolanischem Bindemittel h), 0 bis 30 Gew.-%, insbesondere 5 bis 25 Gew.-%, an nichthydraulischem Bindemittel i), und 0 bis 3 Gew.-%, insbesondere 0,1 bis 2 Gew.-%, an weiteren Additiven j) vorliegen, wobei die individuellen Gewichtsanteile der Komponenten jeweils so gewählt sind, dass sie sich stets zu 100 Gew.-% addieren. Gew.-%-Angaben beziehen sich, insbesondere sofern nicht anders festgelegt, auf den Feststoffanteil der betreffenden Stoffe.

Die der Erfindung zu Grunde liegende Aufgabe wird des Weiteren gelöst durch einen Putz, insbesondere Leichtputz, oder eine erfindungsgemäße Ausfachung, umfassend oder gebildet aus einer erfindungsgemäßen Putzbeschichtungsmasse. Die Trockenrohdichte der erfindungsgemäßen Putzbeschichtung liegt dabei bevorzugt im Bereich von 0,10 bis 0,80 g/cm³, besonders bevorzugt im Bereich von 0,2 bis 0,70 g/cm³ und insbesondere im Bereich von 0,25 bis 0,60 g/cm³. In einer besonders geeigneten Ausgestaltung liegt die Trockenrohdichte der erfindungsgemäßen Putzbeschichtungsmassen nicht oberhalb von 0,55 g/cm³.

Als Putz bezeichnet man im Allgemeinen eine Beschichtung, die auf Wände oder Decken aufgebracht wird und dort aufgetrocknet bzw. abgebunden vorliegt. Dies erzeugt eine ansprechende, gegebenenfalls strukturierte Oberfläche. Die erfindungsgemäßen Putzbeschichtungsmassen können zur Herstellung solcher Putze verwendet werden. Die erfindungsgemäße Beschichtungsmasse kann unter Ausbildung der genannten Putze auf Fassaden und auch auf WDVS-Untergründen angebracht werden. Letztere werden dabei zunächst bevorzugt mit einem Unter- bzw. Grundputz versehen.

Es hat sich überraschend gezeigt, dass sich mit den erfindungsgemäßen Beschichtungsmassen Putze erhalten lassen, die über eine ausgeprägte Festigkeit verfügen. Diese Putze können daher auch, ohne dass man darin ein Armierungsgewebe einlegt, als sogenannte Armierungputze bzw. als Ersatz für Putze enthaltend ein Armierungsgewebe eingesetzt werden. Grundsätzlich können die erfindungsgemäßen Putze als, insbesondere armierungsfreie, Grund- oder Unterputze oder als Oberputze oder als Bestandteil hiervon eingesetzt werden. Des Weiteren hat sich überraschend gezeigt, dass die mit den erfindungsgemäßen Beschichtungsmassen erhaltenen Putze schon als solche über ausgeprägte Wärmedämmeigenschaften verfügen und auch als Wärmedämmputze eingesetzt werden können.

Die der Erfindung zu Grunde liegende Aufgabe wird des Weiteren gelöst durch einen Wandaufbau oder Baukörper, umfassend mindestens einen erfindungsgemäßen Putz, insbesondere Leichtputz, oder mindestens eine erfindungsgemäße Ausfachung. Unter und benachbart zu diesem Putz oder zu dieser Ausfachung, insbesondere unmittelbar an diesen Putz oder diese Ausfachung angrenzend kann dabei ein Unterputz vorliegen gebildet aus einer Putzbeschichtungsmasse enthaltend
b) mindestens ein hydraulisches Bindemittel,
c) mindestens ein Wasserretentionsmittel,
d) mindestens ein Wasserglas und
k) Wasser
   sowie gegebenenfalls
e) mindestens ein Hydrophobierungsmittel und/oder
f) mindestens einen Luftporenbildner und/oder
g) mindestens ein latenthydraulisches Bindemittel und/oder
h) mindestens ein puzzolanisches Bindemittel und/oder
i) mindestens ein nichthydraulisches Bindemittel und/oder
j) weitere Additive.

Als Unterputz wird somit bevorzugt auf eine Beschichtungsmasse zurückgegriffen, die im Wesentlichen mit der erfindungsgemäßen Beschichtungsmasse übereinstimmt, die jedoch nicht die Komponente a), d.h. das mindestens eine getrocknete geschnittene und/oder gehäckselte sowie gegebenenfalls gewalzte Pflanzenmaterial enthält. Auf diese Weise wird eine besonders gute und feste Anbindung an den Untergrund erhalten.

Die der Erfindung zu Grunde liegende Aufgabe wird ferner gelöst durch ein Verfahren zur Herstellung eines erfindungsgemäßen Putzes, insbesondere Leichtputzes, oder einer erfindungsgemäßen Ausfachung sowie ein Verfahren zur Herstellung eines erfindungsgemäßen Wandaufbaus oder eines erfindungsgemäßen Baukörpers, umfassend die Schritte
a) Zurverfügungstellung einer erfindungsgemäßen Putzbeschichtungsmasse,
b) Zurverfügungstellung einer Druckluftförder- und -applikationseinrichtung enthaltend mindestens eine Förderleitung, insbesondere Förderschlauch, mit Applikationsdüse,
c) Einspeisen der Putzbeschichtungsmasse gemäß a) in die Druckluftfördereinrichtung gemäß b), gegebenenfalls unter Zusatz von Wasser (Komponente k)), und anschließend in deren Förderleitung,
d) Fördern der Putzbeschichtungsmasse in Richtung der Düse mittels Dünnstrom- oder Dichtstromverfahren, insbesondere Dünnstromverfahren,
e) Einspeisen von Wasser (Komponente k)) in die Düse und/oder benachbart zur Düse, insbesondere im Wesentlichen senkrecht zur Förderrichtung der Putzbeschichtungsmasse, unter Vermischung mit der Putzbeschichtungsmasse und
f) Applizieren der die Düse verlassenden Putzbeschichtungsmasse auf einen Substratuntergrund eines Wandaufbaus oder eines Baukörpers, insbesondere eine Wandfläche des Wandaufbaus oder Baukörpers, unter Ausbildung eines Putzes oder einer Ausfachung.

In einer alternativen Ausgestaltung kann das erfindungsgemäße Verfahren auch die Schritte umfassen:
a') Zurverfügungstellung einer, insbesondere Wasser (Komponente k)) enthaltenden, erfindungsgemäßen Putzbeschichtungsmasse und
b') Anbringen der Putzbeschichtungsmasse auf einem Substratuntergrund eines Wandaufbaus oder eines Baukörpers, insbesondere einer Wandfläche des Wandaufbaus oder des Baukörpers, mittels Handapplikation unter Ausbildung eines Putzes oder einer Ausfachung.

In einer bevorzugten Ausführungsform umfasst das erfindungsgemäße Verfahren ferner vor Anbringung des erfindungsgemäßen Putzes oder der erfindungsgemäßen Ausfachung die Anbringung eines Unterputzes auf dem Substratuntergrund gebildet aus einer Putzbeschichtungsmasse enthaltend
b) mindestens ein hydraulisches Bindemittel,
c) mindestens ein Wasserretentionsmittel,
d) mindestens ein Wasserglas und
k) Wasser
   sowie gegebenenfalls
e) mindestens ein Hydrophobierungsmittel und/oder
f) mindestens einen Luftporenbildner und/oder
g) mindestens ein latenthydraulisches Bindemittel und/oder
h) mindestens ein puzzolanisches Bindemittel und/oder
i) mindestens ein nichthydraulisches Bindemittel und/oder
j) weitere Additive.

Die vorangehend genannte Ausführungsform des erfindungsgemäßen Verfahrens bringt einen Unterputz an, der auf einer Beschichtungsmasse basiert, die im Wesentlichen mit der erfindungsgemäßen Beschichtungsmasse übereinstimmt, die jedoch nicht die Komponente a), d.h. das mindestens eine getrocknete geschnittene und/oder gehäckselte sowie gegebenenfalls gewalzte Pflanzenmaterial enthält. Des Weiteren kann es zweckmäßig sein, den mit dem vorangehend genannten Unterputz oder den mit der erfindungsgemäßen Beschichtungsmasse beschichteten Untergrund vor Auftragung der Beschichtungsmasse mit Wasser zu befeuchten. Auch ist es empfehlenswert, einen möglichst staubfreien Untergrund einzusetzen.

In einer beispielhaften Ausführungsform des erfindungsgemäßen Verfahrens kann vorgesehen sein, dass die in Schritt c) in die Förderleitung eingespeiste Putzbeschichtungsmasse, als sogenannte Vormasse, Wasser (Komponente k)), insbesondere einen Wasseranteil, bezogen auf das Gesamtgewicht dieser Vormasse, im Bereich von 2 bis 30 Gew.-%, insbesondere im Bereich von 5 bis 25 Gew.-%, enthält. Durch Einbringen einer ersten Menge an Wasser in die Putzbeschichtungsmasse können der Transport und die Handhabung derselben in und durch die Transportleitung vereinfacht werden. Bei der maschinellen Förderung mittels Dünnstromverfahrens kann der durchschnittliche Flächenanteil an geförderter Putzbeschichtungsmasse, bezogen auf den Querschnitt der Förderleitung, im Bereich von 0,3 bis 10 %, insbesondere im Bereich von 0,5 bis 5 %, liegen. Hierbei kann zum Beispiel mit einem Förderdruck in der Förderleitung im Bereich von 0,1 bis 3 bar, bevorzugt im Bereich von 0,2 bis 2,5 bar und besonders bevorzugt im Bereich von 0,2 bis 0,5 bar, die arbeitet werden. Die Fördermenge an Putzbeschichtungsmasse kann hierbei in einer Ausführungsform im Bereich von 10 bis 40 kg/min, insbesondere im Bereich von 20 bis 35 kg/min, liegen. Ferner kann zum Beispiel die Fördermenge an Wasser, die in und/oder benachbart zur Düse eingespeist wird, im Bereich von 1 bis 15 1/min, insbesondere im Bereich von 3 bis 10 1/min, liegen. Dieser hatte sich als besonders vorteilhaft erwiesen, dass die Düse eine Öffnung aufweist, deren Umrissform und/oder Querschnittsfläche im Wesentlichen der der Förderleitung entspricht, oder deren Querschnittsfläche nicht mehr als 10 %, insbesondere nicht mehr als 5 %, geringer ist als die Querschnittsfläche der Förderleitung.

Die erfindungsgemäßen Putzes und die erfindungsgemäße Ausfachung sowie der erfindungsgemäße Wandaufbau und der erfindungsgemäße Baukörpers können für die Innen- und/oder Außenwärme Dämmung wie auch für die Schalldämmung von Gebäuden eingesetzt werden.

Mit der vorliegenden Erfindung gelingt es, einen Putz mit geringer Dichte zugänglich zu machen, der über sehr gute Dämmeigenschaften verfügt, wobei es nicht erforderlich ist, auf Kunststoffprodukte zurück zu greifen. Vielmehr reicht der Einsatz nachwachsender Rohstoffe völlig aus. Es lassen sich aus den erfindungsgemäßen Putzbeschichtungsmassen Putze und Ausfachungen erhalten mit einer Wärmeleitfähigkeit, die zum Beispiel im Bereich von 0,07 bis 0,09 W/(m x K) oder sogar darunter liegt. Folglich können die erfindungsgemäßen Putze als Wärmedämmputze nach DIN V 18 550 eingestuft werden. Aufgrund der geringen Dichte lassen sich die erfindungsgemäßen Putzbeschichtungsmasse ohne weiteres auch händisch auf geeignete Untergründe auftragen. Besonders vorteilhaft ist auch, dass sich die erfindungsgemäßen Putzbeschichtungsmassen großflächig maschinell anbringen lassen. Die Haftung an einen mineralischen Untergrund ist einwandfrei. Insbesondere wenn diese Rauigkeiten von mindestens drei mm aufweisen, kann man regelmäßig auf eine Unterputz- bzw. Vorspritzmörtelschicht verzichten. Die Praxistauglichkeit der erfindungsgemäßen Putzbeschichtungsmasse wird auch dadurch deutlich, dass sich bei maschineller Anbringung Lagen mit einer Dicke von bis zu 10 cm ohne weiteres erhalten lassen. Die mit den erfindungsgemäßen Putzbeschichtungsmassen zugänglichen Putze und Ausfachungen zeichnen sich vorzugsweise auch dadurch aus, dass sie sehr schnell abtrocknen. So kann zum Beispiel auf eine erste erfindungsgemäße Putzlage eine zweite Putzlage schon nach etwa 16 Stunden appliziert werden bei Trocknungsbedingungen von mindestens 15°C und 50 bis 65 % relative Feuchte. Es hat sich überraschend gezeigt, dass sich die erfindungsgemäßen Putze durch eine sehr gute Festigkeit, insbesondere Druckstabilität auszeichnen, und zwar schon nach einer sehr kurzen Trocknungszeit von ca. einem Tag pro 3 cm Schichtdicke. Von Vorteil ist ferner, dass es mit dem erfindungsgemäßen Verfahren gelingt, die erfindungsgemäße Beschichtungsmasse in einer Weise zu applizieren, dass ein Rückprall, insbesondere bei maschineller Anbringung, verhindert bzw. stark zurückgedrängt werden kann. Das erfindungsgemäße Verfahren erlaubt somit, kombiniert mit den erfindungsgemäßen Beschichtungsmassen, einen sehr kostengünstigen Zugang zu Wärmedämmputzen, welche sowohl an Innen- wie auch an Außenwänden angebracht werden können. Die erfindungsgemäßen Putze lassen sich mit einer Trockenrohdichte (bestimmt nach 28 Tagen) erhalten, die ohne weiteres unterhalb von 0,55 g/cm³ liegt. Derartige Putze und Ausfachungen können dabei eine Biegezugfestigkeit (bestimmt nach DIN 18 555/EN 196) im Bereich von 0,2 bis 0,9 N/mm² sowie eine Druckfestigkeit im Bereich von 0,3 bis 0,9 N/mm² aufweisen. Schließlich können bei den erfindungsgemäßen Putzbeschichtungsmassen ansonsten übliche oder notwendige anorganische Zuschlagstoffe wie Sand oder Kies komplett durch nachwachsende Rohstoffe ersetzt werden.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Putzbeschichtungsmasse, umfassend
a) mindestens ein getrocknetes geschnittenes und/oder gehäckseltes, sowie gegebenenfalls gewalztes, Pflanzenmaterial ausgewählt aus der Gruppe bestehend aus Stängeln, Halmen, Blättern, Spreu und Hülsen oder deren beliebige Mischungen,
b) mindestens ein hydraulisches Bindemittel,
c) mindestens ein Wasserretentionsmittel und
d) mindestens ein Wasserglas.

2. Putzbeschichtungsmasse nach Anspruch 1, ferner umfassend e) mindestens ein Hydrophobierungsmittel und/oder
f) mindestens einen Luftporenbildner und/oder
g) mindestens ein latenthydraulisches Bindemittel und/oder
h) mindestens ein puzzolanisches Bindemittel und/oder
i) mindestens ein nichthydraulisches Bindemittel und/oder
j) weitere Additive.

3. Putzbeschichtungsmasse nach Anspruch 1 oder 2, ferner umfassend k) Wasser.

4. Putzbeschichtungsmasse nach einem der vorangehenden Ansprüche, **dadurch gekennzeichnet, dass**
das getrocknete geschnittene und/oder gehäckselte Pflanzenmaterial auf Getreide-, Schilfrohr-, Öl- oder Faserpflanzen oder Hülsenfrüchten oder einer beliebigen Mischung derselben basiert und/oder einen Wassergehalt im Bereich von 1 bis 20 Gew.-%, bevorzugt im Bereich von 3 bis 17 Gew.-%, aufweist.

5. Putzbeschichtungsmasse nach einem der vorangehenden Ansprüche, **dadurch gekennzeichnet, dass**
das getrocknete geschnittene und/oder gehäckselte Pflanzenmaterial Stroh oder Schäben oder Naturfasern oder deren beliebige Mischung, insbesondere Stroh oder Stroh und Schäben, umfasst oder hieraus besteht.

6. Putzbeschichtungsmasse nach Anspruch 5, **dadurch gekennzeichnet, dass** das Stroh Weizen-, Gersten-, Hafer-, Roggen-, Flachs-, Hanf-, Reis-, Rapsstroh oder deren beliebige Mischungen, insbesondere Weizen-, Gersten-, Raps-, Reis- und/oder Hanfstroh, besonders bevorzugt Rapsstroh, umfasst.

7. Putzbeschichtungsmasse nach einem der vorangehenden Ansprüche, **dadurch gekennzeichnet, dass** das getrocknete geschnittene und/oder gehäckselte Pflanzenmaterial, insbesondere das Stroh und/oder die Schäben, eine durchschnittliche Länge aufweist, die nicht oberhalb von etwa 60 mm, insbesondere nicht oberhalb von 50 mm und besonders bevorzugt nicht oberhalb von 45 mm, liegt und/oder die nicht unterhalb von 5 mm, insbesondere nicht unterhalb von 10 mm und besonders bevorzugt nicht unterhalb von 15 mm, liegt.

8. Putzbeschichtungsmasse nach einem der vorangehenden Ansprüche, **dadurch gekennzeichnet, dass**
das Wasserretentionsmittel Acrylatverdicker, Polyurethanverdicker, natürliche oder synthetische anorganische Verdicker, insbesondere ausgewählt aus der Gruppe bestehend aus Hektoriten, Bentoniten, Smektiten oder deren beliebige Mischungen, modifizierte Stärke, Xanthan, Guar, Polysaccharide, insbesondere ausgewählt aus der Gruppe bestehend aus Cellulose und/oder Cellulosederivaten, bevorzugt Celluloseether, besonders bevorzugt Hydroxyethylcellulose, Hydroxypropylmethylcellulose (HPMC), Hydroxyethylmethylcellulose (HEMC), Methylcellulose und/oder Ethylmethylcellulose (EMC), oder beliebige Mischungen hiervon umfasst oder hieraus besteht.

9. Putzbeschichtungsmasse nach einem der vorangehenden Ansprüche, **dadurch gekennzeichnet, dass**
das hydraulische Bindemittel hydraulische Kalke und/oder Zemente, insbesondere Zemente nach DIN EN 197-1, bevorzugt DIN EN 197-1 - CEM I, besonders bevorzugt DIN EN 197-1 - CEM I 52,5R oder - CEM I 42,5R, und/oder dass das latenthydraulische Bindemittel Hochofenschlacke, Hüttensand und/oder Flugasche und/oder dass das puzzolanische Bindemittel Mikrosilika, Trass und/oder Tuff, besonders bevorzugt Mikrosilika, umfasst oder hieraus besteht.

10. Putzbeschichtungsmasse nach einem der vorangehenden Ansprüche, **dadurch gekennzeichnet, dass**
diese im Wesentlichen keine organischen Bindemittel und/oder im Wesentlichen keinen Sand, insbesondere keine Füllstoffe, und/oder keinen Kies, insbesondere kein Körnungsmaterial, enthalten.

11. Putzbeschichtungsmasse nach einem der vorangehenden Ansprüche, **dadurch gekennzeichnet, dass** darin, bezogen auf das Gesamtgewicht der Komponenten b) bis j),
70 bis 95 Gew.-%, insbesondere 75 bis 90 Gew.-%, an hydraulischem Bindemittel b),
0,01 bis 2,0 Gew.-%, insbesondere 0,05 bis 1,0 Gew.-%, an Wasserretentionsmittel c),
0,05 bis 5 Gew.-%, insbesondere 0,3 bis 2 Gew.-%, an Wasserglas d),
0 bis 5 % Gew.-%, insbesondere 0,5 bis 3 Gew.-%, an Hydrophobierungsmittel e),
0 bis 5 Gew.-%, insbesondere 0,05 bis 2,0 Gew.-%, an Luftporenbildner f),
0 bis 30 Gew.-%, insbesondere 5 bis 20 Gew.-%, an latenthydraulischem Bindemittel g),
0 bis 30 Gew.-%, insbesondere 5 bis 20 Gew.-%, an puzzolanischem Bindemittel h),
0 bis 30 Gew.-%, insbesondere 5 bis 25 Gew.-%, an nichthydraulischem Bindemittel i), und
0 bis 3 Gew.-%, insbesondere 0,1 bis 2 Gew.-%, an weiteren Additiven j)
vorliegen, wobei die individuellen Gewichtsanteile der Komponenten jeweils so gewählt sind, dass sie sich stets zu 100 Gew.-% addieren.

12. Putzbeschichtungsmasse nach einem der vorangehenden Ansprüche, **dadurch gekennzeichnet, dass**, bezogen auf die Gesamtmenge an hydraulischen, latenthydraulischen und puzzolanischen Bindemitteln, der Gewichtsanteil an hydraulischem Bindemittel mindestens 50 %, bevorzugt mindestens 65 % und besonders bevorzugt mindestens 75 %, beträgt.

13. Putzbeschichtungsmasse nach einem der Ansprüche 2 bis 12, **dadurch gekennzeichnet, dass**
die Additive Konservierungsmittel, Dispergiermittel, Rheologieverbesserer, Abbindeverzögerer, Abbindebeschleuniger, Pigmente, Dispersionen, Fasermaterial, oder beliebigen Mischungen dieser Komponenten umfassen oder hieraus bestehen oder dass die Putzbeschichtungsmasse kein Konservierungsmittel enthält.

14. Putzbeschichtungsmasse nach einem der vorangehenden Ansprüche, **dadurch gekennzeichnet, dass**, bezogen auf das Gewicht der Putzbeschichtungsmasse exklusive Wasser (Komponente k)), der Anteil an getrocknetem geschnittenen und/oder gehäckselten Pflanzenmaterial im Bereich von 5 bis 50 Gew.-%, bevorzugt im Bereich von 10 bis 40 Gew.-% und besonders bevorzugt im Bereich von 15 bis 30 Gew.-%, liegt.

15. Putz, insbesondere Leichtputz und/oder Wärmedämmputz, oder Ausfachung, umfassend oder gebildet aus einer Putzbeschichtungsmasse gemäß einem der vorangehenden Ansprüche.

16. Putz nach Anspruch 15, **dadurch gekennzeichnet, dass** die Trockenrohdichte der Putzbeschichtungsmasse im Bereich von 0,10 bis 0,80 g/cm³, bevorzugt im Bereich von 0,2 bis 0,70 g/cm³ und besonders bevorzugt im Bereich von 0,25 bis 0,60 g/cm³, insbesondere nicht oberhalb von 0,55 g/cm³, liegt.

17. Putz nach Anspruch 15 oder 16, **dadurch gekennzeichnet, dass** dieser einen, insbesondere armierungsfreien, Grund- oder Unterputz und/oder einen Oberputz darstellt oder Bestandteil hiervon ist.

18. Wandaufbau oder Baukörper, umfassend mindestens einen Putz, insbesondere Leichtputz und/oder Wärmedämmputz, oder mindestens eine Ausfachung nach einem der Ansprüche 15 bis 17.

19. Wandaufbau oder Baukörper nach Anspruch 18, ferner umfassend unter und benachbart zu dem Putz einen Unterputz gebildet aus einer Putzbeschichtungsmasse enthaltend
b) mindestens ein hydraulisches Bindemittel,
c) mindestens ein Wasserretentionsmittel,
d) mindestens ein Wasserglas und
k) Wasser
sowie gegebenenfalls
e) mindestens ein Hydrophobierungsmittel und/oder
f) mindestens einen Luftporenbildner und/oder
g) mindestens ein latenthydraulisches Bindemittel und/oder
h) mindestens ein puzzolanisches Bindemittel und/oder
i) mindestens ein nichthydraulisches Bindemittel und/oder
j) weitere Additive.

20. Verfahren zur Herstellung eines Putzes, insbesondere Leichtputzes, oder einer Ausfachung nach einem der Ansprüche 15 bis 17, oder zur Herstellung eines Wandaufbaus oder eines Baukörpers nach einem der Ansprüche 18 oder 19 umfassend die Schritte
a) Zurverfügungstellung einer Putzbeschichtungsmasse nach einem der Ansprüche 1 bis 14,
b) Zurverfügungstellung einer Druckluftförder- und -applikationseinrichtung enthaltend mindestens eine Förderleitung, insbesondere Förderschlauch, mit Applikationsdüse,
c) Einspeisen der Putzbeschichtungsmasse gemäß a) in die Druckluftfördereinrichtung gemäß b), gegebenenfalls unter Zusatz von Wasser (Komponente k)), und anschließend in deren Förderleitung,
d) Fördern der Putzbeschichtungsmasse in Richtung der Düse mittels Dünnstrom- oder Dichtstromverfahren, insbesondere Dünnstromverfahren,
e) Einspeisen von Wasser in die Düse und/oder benachbart zur Düse, insbesondere im Wesentlichen senkrecht zur Förderrichtung der Putzbeschichtungsmasse, unter Vermischung mit der Putzbeschichtungsmasse und
f) Applizieren der die Düse verlassenden Putzbeschichtungsmasse auf einen Substratuntergrund eines Wandaufbaus oder eines Baukörpers, insbesondere eine Wandfläche des Wandaufbaus oder Baukörpers, unter Ausbildung eines Putzes oder einer Ausfachung;
oder umfassend die Schritte
a') Zurverfügungstellung einer, insbesondere Wasser (Komponente k)) enthaltenden, Putzbeschichtungsmasse nach einem der Ansprüche 1 bis 14 und
b') Anbringen der Putzbeschichtungsmasse auf einem Substratuntergrund eines Wandaufbaus oder eines Baukörpers, insbesondere einer Wandfläche des Wandaufbaus oder des Baukörpers, mittels Handapplikation unter Ausbildung eines Putzes oder einer Ausfachung.

21. Verfahren nach Anspruch 20, ferner umfassend
vor Anbringung des Putzes oder der Ausfachung die Anbringung eines Unterputzes auf dem Substratuntergrund gebildet aus einer Putzbeschichtungsmasse enthaltend b) mindestens ein hydraulisches Bindemittel,
c) mindestens ein Wasserretentionsmittel,
d) mindestens ein Wasserglas und
k) Wasser
sowie gegebenenfalls
e) mindestens ein Hydrophobierungsmittel und/oder
f) mindestens einen Luftporenbildner und/oder
g) mindestens ein latenthydraulisches Bindemittel und/oder
h) mindestens ein puzzolanisches Bindemittel und/oder
i) mindestens ein nichthydraulisches Bindemittel und/oder
j) weitere Additive.

22. Verwendung des Putzes oder der Ausfachung gemäß einem der Ansprüche 15 bis 17 oder des Wandaufbaus oder des Baukörpers gemäß Anspruch 18 oder 19 für die Innen- oder Außenwärme- und/oder -Schalldämmung von Gebäuden, insbesondere für die Innenwärme- und/oder -Schalldämmung.
